# FASCICULE DE BREVET EUROPEEN

(11) **EP 3 025 161 B1**
(45) Date de publication et mention de la délivrance du brevet: **15.11.2017**
(21) Numéro de dépôt: 14738479.6
(22) Date de dépôt: 08.07.2014
(51) Int. Cl.: G01R 31/28, G01R 31/317, G06F 17/50

(54) **PROCEDE AUTOMATISE D'ANALYSE D'UNE CARTE PORTANT PLUSIEURS COMPOSANTS DE TYPE FPGA**
AUTOMATISIERTES VERFAHREN ZUR ANALYSE EINER PLATTE MIT MEHREREN FPGA-KOMPONENTEN
AUTOMATED METHOD FOR ANALYZING A BOARD HAVING A PLURALITY OF FPGA COMPONENTS

(30) Priorité: 26.07.2013 FR 1357416
(43) Date de publication de la demande: 01.06.2016
(73) Titulaire: Mentor Graphics Corporation, Wilsonville, OR 97070 (US)
(72) Inventeur: TUNA, Matthieu, F-75014 Paris (FR); MARRAKCHI, Zied, F-75013 Paris (FR); ALEXANDRE, Christophe, F-93500 Pantin (FR)
(74) Mandataire: Lavialle, Bruno François Stéphane
(86) Numéro de dépôt international: PCT/EP2014/064634
(87) Numéro de publication internationale: WO 2015/010898

(56) Documents cités:
- US-B1- 7 657 855
- US-B1- 7 886 256
- KOUADRI-MOSTEFAOUI ET AL: "Large Scale On-Chip Networks : An Accurate Multi-FPGA Emulation Platform", DIGITAL SYSTEM DESIGN ARCHITECTURES, METHODS AND TOOLS, 2008. DSD '08. 11TH EUROMICRO CONFERENCE ON, IEEE, PISCATAWAY, NJ, USA, 3 septembre 2008 (2008-09-03), pages 3-9, XP031359891, DOI: 10.1109/DSD.2008.130 ISBN: 978-0-7695-3277-6
- Russell Tessier: "Multi-FPGA Systems: Logic Emulation." In: "Reconfigurable Computing: The Theory and Practice of FPGA-Based Computation", 1 janvier 2008 (2008-01-01), Morgan Kaufmann, XP055053125, ISBN: 978-0-12-370522-8 pages 637-669, 30.30.5 - 30.6.2; page 646 - page 657

## Description

L'invention concerne le prototypage d'un circuit ASIC au moyen d'un système de type multi-FPGA tel qu'une carte électronique portant plusieurs circuits FPGA interconnectés.

### ARRIERE PLAN DE L'INVENTION

En pratique, le développement d'un circuit ASIC (qui est l'acronyme de Application Specific Integrated Circuit signifiant circuit intégré propre à une application), s'étend sur une durée de l'ordre de plusieurs mois, ce qui est relativement long vis-à-vis du cycle de développement des appareils électroniques actuels.

Pour tester le fonctionnement d'un appareil tel qu'un téléphone mobile intelligent, parallèlement au développement de chaque circuit ASIC qu'il doit comporter, on réalise un prototype de chaque circuit ASIC sous forme d'un système à composants FPGA.

Un composant FPGA (qui est l'acronyme de Field Programmable Gate Array signifiant réseau de portes logiques programmable in situ) est un réseau logique programmable pouvant être reprogrammé après sa fabrication.

Compte tenu de la puissance de calcul importante et croissante des circuits ASIC devant être prototypés, il est nécessaire d'utiliser non pas un composant FPGA, mais plusieurs composants FPGA interconnectés par une carte électronique les portant pour mettre en oeuvre la conception logique dans le système FPGA.

Pour développer un prototype multi-FPGA, la conception logique, c'est-à-dire le comportement fonctionnel à implémenter, se présente sous forme d'une liste d'interconnexions logiques (usuellement désignée par l'expression Design Netlist), la définition de la carte, se présente sous forme d'une liste d'interconnexions entre composant FPGA (usuellement désignée par l'expression Board Netlist), qui définit chaque FPGA et les connections entre ces FPGAs.

Un tel système comporte ainsi d'une part des bascules, c'est-à-dire des cellules séquentielles de FPGA, une bascule pouvant être considérée comme un point initial ou final d'un chemin de synchronisation, selon qu'il s'agit d'un chemin de synchronisation démarrant à cette cellule ou bien se terminant à cette cellule.

Et il comporte d'autre part des ensembles de cellules logiques de FPGA qui communiquent entre elles par des signaux, ces cellules logiques étant considérées comme passantes dans le chemin de synchronisation. Une cellule logique ne peut ainsi être ni un point de départ ni un point final, mais elle se caractérise par le retard qu'elle introduit dans le chemin de synchronisation dont elle fait partie.

L'analyse temporelle est le calcul de la synchronisation attendue : le temps de parcours du chemin de synchronisation le plus long entre une bascule de point initial et une bascule de point final permet de connaître la fréquence d'horloge système à laquelle la carte pourra fonctionner.

Actuellement, seule une analyse temporelle de FPGA, dite « analyse temporelle intra-FPGA » est effectuée de façon automatisée, ce qui permet de connaître la fréquence d'horloge maximale admissible pour chaque FPGA analysé.

En pratique, une analyse de fréquence basée sur une modélisation complète de l'intégralité de la carte multi-FPGA représentant toutes les cellules logiques du système est impossible car elle nécessite une puissance de calcul et une capacité de mémoire colossales compte tenu de la très grande étendue que peuvent avoir les cartes multi-FPGA actuelles.

KOUADRI-MOSTEFAOUI ET AL: "Large Scale On-Chip Networks : An Accurate Multi-FPGA Emulation Platform", 2008. IEEE, PISCATAWAY, NJ, USA, 3 septembre 2008, pages 3-9, ISBN: 978-0-7695-3277-6 divulgue un procédé d'analyse d'un circuit intégré implémenté sur une carte électronique portant plusieurs puces programmables de type FPGA interconnectés.

### OBJET DE L'INVENTION

L'invention apporte une solution pour réaliser automatiquement une analyse temporelle d'un système projeté sur une telle carte dans son intégralité.

### RESUME DE L'INVENTION

A cet effet, l'invention a pour objet un procédé automatisé d'analyse d'un circuit intégré implémenté sur une carte électronique portant plusieurs puces programmables de type FPGA interconnectées et programmées, selon une conception logique prédéterminée, cette carte établissant des liens inter-puce reliant des blocs logiques appartenant à différentes puces, pour former des chemins destinés chacun à être parcouru par un signal, chaque chemin comportant au moins deux portions intra-puce, et au moins une portion inter-puce, ce procédé comportant :
- l'établissement d'un graphe représentatif de la carte et dans lequel chaque lien représente une portion inter-puce ou une portion intra-puce ;
- une détermination pour chaque puce, du temps de parcours de chaque portion de chemin traversant cette puce, chaque temps de parcours correspondant à la somme des temps de réalisation des opérations logiques appliquées au signal dans la puce ;
- une détermination du temps de parcours inter-puce pour chaque portion inter-puce représentée par un lien du graphe ;
- une détermination du temps de parcours de chaque chemin du système implémenté sur la carte, par cumul des temps de parcours intra-puce et des temps de parcours inter-puce associés à chaque lien du graphe.

L'invention concerne également un procédé ainsi défini, dans lequel la détermination des temps intra-puce et inter-puce sont blasées :
- sur une valeur de retard type introduit par toute cellule logique du système pour les portions intra-puce ou une valeur provenant d'un outil d'analyse temporelle statique propre à la puce programmable pour les portions intra-puce ;
- sur les longueurs des pistes physiques ou une valeur provenant d'un outil d'analyse temporelle statique propre à la carte pour les portions inter-puce.

L'invention concerne également un procédé ainsi défini, dans lequel le temps de parcours d'une portion inter-puce est un retard introduit par une piste physique simple, ou un retard correspondant à l'ajout d'un sérialiseur et d'un désérialiseur intégrés aux puces situés respectivement en amont et en aval de cette piste dans le cas d'une piste multiplexée.

L'invention concerne également un procédé ainsi défini, dans lequel le temps de retard introduit par un sérialiseur et par un déserialiseur est chiffré en prenant en compte le rang de traitement du signal circulant dans le chemin relativement aux autres signaux.

L'invention concerne également un procédé ainsi défini, comportant la détermination pour chaque signal empruntant une portion multiplexée avant d'être délivré à une puce, de l'instant auquel ce signal est émis depuis la puce initiale et de l'instant auquel ce signal est délivré à la puce de destination.

L'invention concerne également un procédé ainsi défini, comportant, en cas de violation de synchronisation d'un signal multiplexé, la détermination d'un changement de l'ordre de traitement des signaux dans le sérialiseur et le désérialiseur assurant le multiplexage, pour supprimer la violation de synchronisation.

### BREVE DESCRIPTION DES FIGURES

La figure 1 est une représentation schématique montrant deux composants FPGA portés par une carte électronique en étant reliés l'un à l'autre par des pistes ;
La figure 2 est une représentation schématique montrant deux composants FPGA reliés l'un à l'autre par une piste de transmission précédée d'un sérialiseur et suivie d'un désérialiseur ;
La figure 3 est une représentation schématique montrant un signal d'horloge système et un signal d'horloge plus rapide dédié au cadencement d'un sérialiseur ou d'un désérialiseur ;
La figure 4 est une représentation schématique montrant un cas de violation de synchronisation dû à un signal arrivant trop tardivement dans le FPGA auquel il est délivré ;
La figure 5 est une représentation schématique montrant un cas de violation de synchronisation dû à un signal arrivant trop tôt dans le FPGA auquel il est délivré.

### DESCRIPTION DETAILLEE DE L'INVENTION

L'invention est basée sur le constat selon lequel dans une carte électronique comportant plusieurs composants de type FPGA interconnectés, ce sont les liaisons entre composants FPGA qui pénalisent la fréquence de fonctionnement, et non pas les composants FPGA par eux-mêmes.

En effet, les performances des composants FPGA sont très régulièrement améliorées, en termes de fréquence de fonctionnement et de puissance de calcul, mais le nombre d'éléments de connexion de ces composants évolue très peu. Il s'ensuit que si le traitement des informations au sein d'un composant FPGA est de plus en plus rapide, le transfert de données d'un FPGA à un autre reste limité à des taux de transfert qui sont trop faibles et qui évoluent peu au regard de la puissance de traitement des composants FPGA.

Selon l'invention, on réalise une analyse temporelle statique complète de la carte en utilisant des outils de simulation informatiques fournis avec les circuits FPGA utilisés pour déterminer les retards intra-FPGA et en construisant un graphe de synchronisation permettant de caractériser les retards introduits sur chaque lien inter-FPGA.

Lorsque le graphe de synchronisation est complètement construit, chaque FPGA y est représenté principalement par les retards qu'il introduit dans chaque chemin de synchronisation le traversant, et chaque lien de ce graphe représente une voie de communication entre deux FPGA caractérisée par le retard qu'elle introduit.

Dans la description ci-après, l'invention est présentée dans le cadre d'une mise en oeuvre avec des puces FPGA, mais elle s'applique aux puces FPGA proprement dites aussi bien qu'à une mise en oeuvre avec des puces CPLD (signifiant Complex Programmable Logic Device) ou bien avec des puces PLA (signifiant Programmable Logic Array) ou PSoC (signifiant Programmable System On Chip), ou encore avec toute puce programmable se rapprochant des puces FPGA.

### Première étape

La carte multi-FPGA est conçue pour implémenter une conception logique définie en premier lieu par une liste d'interconnexions (de type "Verilog Netlist"), qui est divisée et segmentée selon le nombre de FPGA que la carte comporte, pour générer un graphe de synchronisation du système. Cette liste d'interconnexions définit ainsi les parties de la conception contenues dans chaque FPGA et les communications entre les FPGA.

Partant de cette liste d'interconnexions divisée et segmentée, on établit une première version du graphe de synchronisation qui définit en particulier les différents liens reliant chaque FPGA à un autre FPGA sur la carte, et dans lequel chaque FPGA est représenté sous une forme partielle donnant principalement les retards qu'introduit le FPGA dans chaque chemin de synchronisation qui le traverse.

La communication entre les différentes parties est représentée dans le graphe sous forme de liens simples : ces liens ne reflètent pas l'organisation des pistes physiques de la carte et les éventuelles pistes multiplexées, car le routage en soi n'a pas encore été défini.

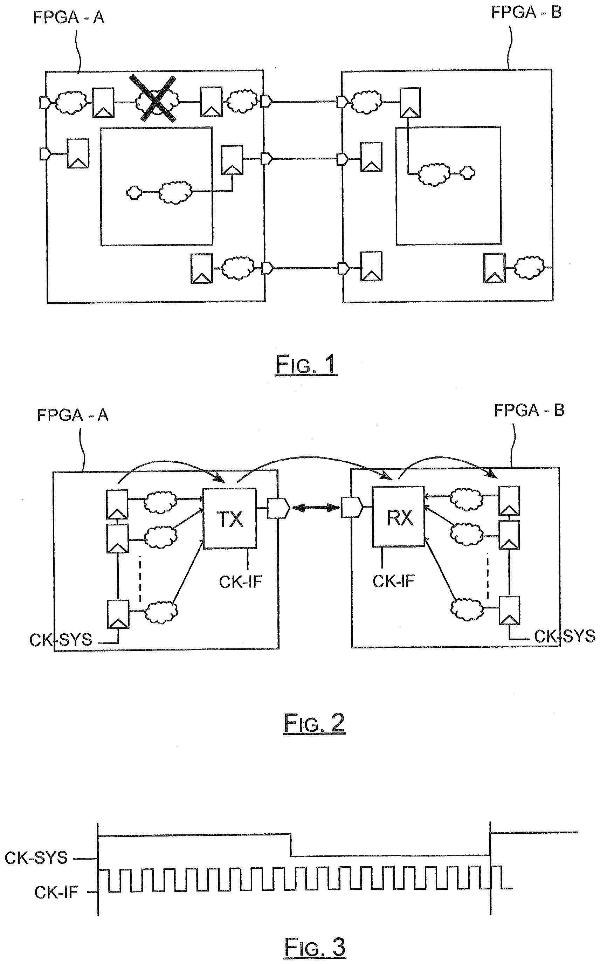

Ainsi, dans l'exemple de la figure 1, on a représenté deux composants FPGA, repérés par FPGA-A et FPGA-B, qui communiquent l'un avec l'autre par l'intermédiaire de trois liens. Ces trois liens sont représentés par trois traits dans la figure 1, mais ils ne correspondent pas nécessairement à trois pistes physiques distinctes. A terme, ces trois liens pourront, selon les choix effectués au cours de l'opération de routage, transiter de manière sérialisée sur une même piste qu'ils partageront, ou bien emprunter effectivement trois pistes physiques distinctes.

Une première analyse temporelle statique avant routage peut ainsi être réalisée sur la base de ce graphe de synchronisation. Les retards temporels entre les FPGA et les retards temporels à l'intérieur de chaque FPGA sont à ce stade des estimations du fait que les sérialiseurs et désérialiseurs nécessaires au routage proprement dit n'ont pas encore été intégrés aux FPGA.

Cette première étape est réalisée par des moyens informatiques de manière entièrement automatisée : on établit d'une part une estimation du temps de transfert pour chaque portion de chemin de synchronisation traversant un FPGA en considérant que le retard introduit par n'importe quelle cellule a une valeur type prédéterminé et en évaluant le nombre de cellules traversé par chaque portion intra-FPGA. Complémentairement, le temps de transfert des signaux transitant dans chaque lien inter-FPGA est estimé, par exemple sur la base de la longueur des pistes existantes et la vitesse de transfert de signaux sur de telles pistes.

Cette première analyse constitue une évaluation qui sert avantageusement à réaliser un contrôle d'intégrité, c'est-à-dire à détecter d'éventuelles erreurs de conception importantes donnant lieu à des retards de transmission significativement trop élevés.

### Deuxième étape

Le routage de la carte est ensuite établi en utilisant des moyens informatiques pour définir les pistes simples et les pistes multiplexées de la carte. Chaque piste simple assure le transfert d'un signal simple d'un FPGA à un autre, et chaque piste multiplexée assure le transfert de plusieurs signaux d'un FPGA à un autre, au moyen d'un sérialiseur et d'un désérialiseur situés en amont et en aval de cette piste.

Le multiplexage ou sérialisation sert à augmenter la bande passante des FPGA et à compenser le nombre limité de pistes physiques sur la carte. Dans le cas où le nombre de signaux communiquant entre une paire de puces programmables dépasse le nombre de connexions physiques sur la carte, certains signaux sont multiplexés afin de partager la même connexion physique. Le nombre de signaux multiplexé correspond au taux de multiplexage. Plus le taux de multiplexage augmente, plus le temps nécessaire pour envoyer les données en série augmente et par conséquent la fréquence du système diminue. Le choix des signaux à multiplexer et leur taux de multiplexage dépend de leurs criticités. La criticité d'un signal est une fonction de la longueur/délai des chemins combinatoires auxquels il appartient. En se basant sur l'analyse temporelle du système le délai de chaque chemin est déterminé et ainsi la criticité des signaux est calculée. Plus le signal est critique (appartient à un chemin très long) plus son taux de multiplexage est petit. Nous pouvons aller jusqu'à ne pas multiplexer certains signaux critiques (taux de multiplexage = 1).

L'étape de sérialisation regroupe un certain nombre de signaux à router dans une seule piste physique, comme illustré schématiquement en figure 2. Pour chaque piste multiplexée, un sérialiseur est ajouté dans le graphe de synchronisation au niveau du FPGA situé en amont de la piste multiplexée, et un désérialiseur est ajouté dans ce graphe au niveau du FPGA situé en aval de la piste multiplexée.

Dans l'exemple de la figure 2, le sérialiseur repéré par TX est intégré au composant portant le FPGA-A, et le désérialiseur RX est intégré au composant portant le FPGA-B.

Il est à noter que la carte utilise une horloge de base, notée CK-SYS, les sérialiseur TX et désérialiseur RX utilisent quant à eux une horloge rapide, notées CK-IF, qui est par exemple une vingtaine de fois plus rapide que l'horloge de base, comme illustré en figure 3. Cette horloge rapide cadence le sérialiseur pour qu'il envoie rapidement les données par la piste physique au désérialiseur avant le front montant suivant de la CK-SYS.

Le graphe de synchronisation est alors complété en y ajoutant les retards temporels introduits par chaque piste simple et par chaque piste multiplexée. Chaque retard ajouté est ainsi soit un retard de piste physique et éventuellement un retard de sérialiseur/désérialiseur si ces éléments ont été insérés.

À ce stade, les retards de synchronisation à l'intérieur des FPGA sont encore une estimation, c'est-à-dire des valeurs inexactes, du fait que les sérialiseurs et désérialiseurs n'ont pas encore été à proprement parler intégrés aux FPGA.

### Troisième étape

La définition de chaque FPGA est alors complétée par l'ajout de sérialiseurs et de désérialiseurs en amont et en aval de chaque piste multiplexée, de sorte qu'il est possible de réaliser l'analyse temporelle exacte de chaque FPGA. Celle-ci est réalisée au moyen des outils informatiques de simulation qui sont fournis avec les composants FPGA.

Ces outils permettent maintenant de chiffrer de façon exacte, pour chaque chemin de synchronisation traversant un composant FPGA, le temps de retard qui est introduit par le FPGA, puisque la définition de chaque FPGA a le cas échéant été complétée par l'ajout de sérialiseurs et de désérialiseurs.

Cette analyse fournit un fichier contenant toutes les informations temporelles pour chaque FPGA, ce qui permet de connaître les temps de retard introduits par chaque FPGA pour chaque chemin de synchronisation emprunté par un signal.

Sur la base de l'analyse temporelle de chaque FPGA, le graphe de synchronisation est complété de manière à y intégrer tous les retards introduits par les circuits FPGA, dans chaque chemin de synchronisation.

Le graphe de synchronisation comporte suffisamment d'éléments pour réaliser une analyse temporelle statique précise de l'ensemble de la carte, puisque la totalité des informations temporelles exactes est maintenant connue et contenue dans ce graphe de synchronisation. On connaît ainsi le retard pour chaque portion de chemin de synchronisation intra-FPGA et pour chaque chemin de synchronisation inter-FPGA.

Ce graphe de synchronisation peut ainsi se borner à ne représenter que les connexions des entrées au premier étage de bascules des FPGA, et les connexions du dernier étage des bascules aux sorties de FPGA, y compris les bascules et l'arbre d'horloge pilotant ces bascules, comme illustré schématiquement à la figure 1.

Ce graphe de synchronisation est ainsi prévu partiel en n'intégrant pas la définition explicite complète du contenu de chaque FPGA, ce qui permet de réaliser de façon rapide une analyse temporelle statique précise.

Dans l'analyse temporelle statique selon l'invention, les sérialiseurs et les désérialiseurs intégrés aux FPGA sont considérés comme n'importe quelle logique combinatoire. L'invention permet ainsi de faire état de la synchronisation entre deux FPGA de manière précise, entre des bascules système, même si des sérialiseurs/désérialiseurs sont introduits.

### Signal arrivant trop tard

Grâce à cette analyse statique temporelle de l'intégralité de la carte il est possible entre autres d'identifier les cas dans lesquels un signal multiplexé arrive trop tardivement dans le FPGA auquel il est délivré, et les cas dans lesquels un signal multiplexé arrive trop tôt dans le FPGA auquel il est délivré.

Ce type de situation est dû au fait que les horloges CK-SYS des différents FPGA de la carte sont en pratique déphasées les unes par rapport aux autres. Les signaux d'horloge de chaque FPGA sont calés sur une même horloge commune CK-SYS de la carte électronique, selon un arbre d'horloge intégrant des éléments logiques pour activer et désactiver l'horloge de chaque FPGA selon qu'il est sollicité ou non, afin de limiter la consommation énergétique. Ces éléments logiques introduisent des retards différents dans les horloges CK-SYS de chaque FPGA.

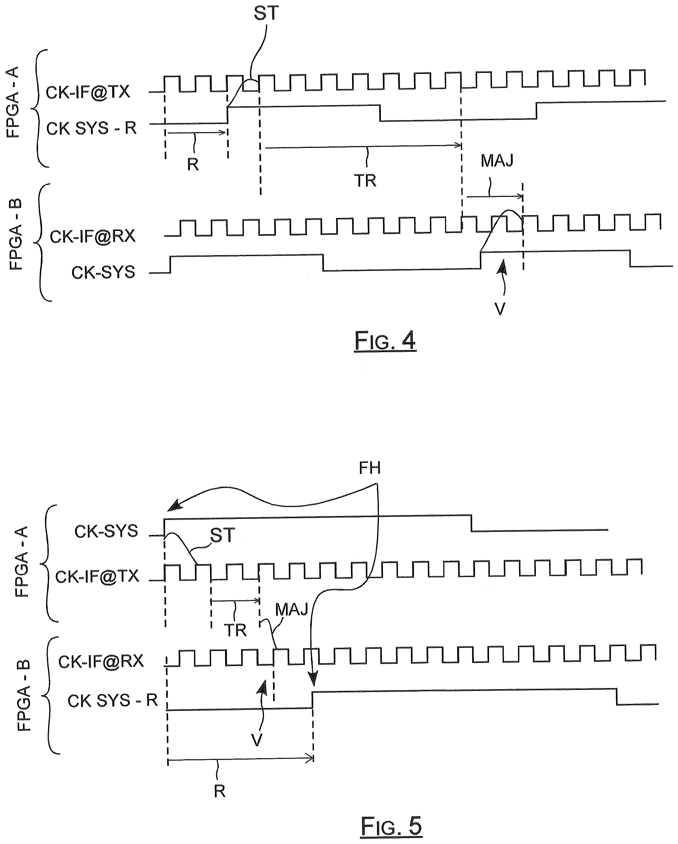

Lorsqu'un signal arrive trop tard comme dans la figure 4 et qu'il n'est pas saisi par le front d'horloge correct dans le FPGA auquel il est délivré, cela constitue une violation de la synchronisation.

Dans le cas de la figure 4, ceci est dû au fait que l'horloge système CK-SYS-R dans le FPGA-A depuis lequel le signal est émis, est en retard de la valeur R par rapport à l'horloge système CK-SYS dans le FPGA-B recevant le signal, ce qui réduit le temps de transfert global disponible, provoquant par là même un retard au niveau du signal délivré.

Comme illustré dans cette figure 4, le signal subit d'abord le retard R et est transmis au sérialiseur TX dans le FPGA-A en étant retardé d'un temps de stabilisation ST avant d'être transmis sur la piste physique, ce qui introduit un retard de transmission supplémentaire noté TR. Les différents signaux reçus dans le désérialiseur RX du FPGA-B subissent ensuite un retard de mise à jour, noté MAJ, avant d'être délivrés dans le FPGA-B.

Comme on le voit sur la figure 4, l'instant auquel le signal est délivré dans le FPGA-B, représenté par un trait pointillés vertical, est trop tardif par rapport au front montant de l'horloge CK-SYS, de sorte que ce signal n'est pas saisi correctement par le FPGA-B qui le reçoit, ce qui correspond à la violation de synchronisation repérée par V.

### Signal arrivant trop tôt

Lorsqu'un signal arrive trop tôt et qu'il n'est pas saisi par le front d'horloge correct dans le FPGA auquel il est délivré, comme dans le cas de la figure 5, cela constitue un autre type de violation de la synchronisation.

Cette situation correspond typiquement au cas de figure dans lequel l'horloge CK-SYS-R du FPGA-B qui reçoit le signal est en retard d'une valeur R par rapport à l'horloge du FPGA-A depuis lequel le signal est émis.

Dans la situation de la figure 5, le retard R vaut de l'ordre d'un quart de la période de l'horloge CK-SYS, de sorte que le signal est émis par le FPGA-A sur un certain front d'horloge noté FH, mais il est reçu dans le FPGA-B par le même front d'horloge FH, retardé de la valeur R.

Là aussi, le signal subit d'abord un retard ST correspondant à sa stabilisation dans le sérialiseur, avant de subir un autre retard TR correspondant à sa transmission sur la piste physique, après quoi il subit un autre retard correspondant à la mise à jour MAJ de ce signal dans le désérialiseur avant délivrance dans le FPGA-B.

Dans le cas de la figure 5, la somme des retards ST, TR et MAJ est inférieure au retard R de l'horloge système CK-SYS-R du FPGA-B par rapport à l'horloge système CK-SYS du FPGA-A, de sorte que le signal qui est émis sur le front montant FH depuis le FPGA-A est saisi sur le même front montant de l'horloge système du FPGA-B qui est déphasé.

### Résolution des violations de synchronisation

Selon l'invention, le cas de figure où un signal multiplexé arrive trop tôt et où un signal multiplexé arrive trop tard est résolu en réagençant l'ordre de traitement des signaux dans le sérialiseur et dans le désérialiseur

Les contraintes temporelles sont satisfaites quand les synchronisations inter-FPGA et intra-FPGA le sont aussi. Le flux d'analyse temporelle sur toute la carte se déroule ainsi :
Ainsi, l'analyse temporelle est d'abord effectuée sur le graphe de synchronisation contenant toutes les informations temporelles de chaque FPGA et des communications entre les FPGA.

Ensuite, sur la base des signaux donnant lieu à des conflits de synchronisation (arrivant trop tard ou trop tôt) des réagencements sont réalisés dans les sérialiseurs et désérialiseur. Dans le cas d'un signal arrivant trop tard, son rang de traitement est diminué pour qu'il soit traité et transmis avant les autres afin de ne pas arriver trop tard. Dans le cas d'un signal arrivant trop tôt, son rang de traitement est augmenté pour qu'il soit traité et transmis après les autres afin de ne pas arriver trop tôt.

Réagencement de signaux : le processus calcule le retard de chaque signal et les réagence pour satisfaire les contraintes temporelles. Cette étape génère aussi les nouvelles contraintes temporelles pour le FPGA, puisqu'elle conduit à modifier les caractéristiques du sérialiseur et du déserialiseur qui sont intégrés à des FPGA. En fin de compte, seule l'analyse temporelle intra-FPGA doit être refaite pour contrôler si la synchronisation est satisfaite ou non vis-à-vis de l'ensemble des signaux.

## Revendications

1. Procédé automatisé d'analyse d'un circuit intégré implémenté sur une carte électronique portant plusieurs puces programmables de type FPGA interconnectées et programmées, selon une conception logique prédéterminée, cette carte établissant des liens inter-puce reliant des blocs logiques appartenant à différentes puces, pour former des chemins destinés chacun à être parcouru par un signal, chaque chemin comportant au moins deux portions intra-puce, et au moins une portion inter-puce, ce procédé est **caractérisé par** :
- l'établissement d'un graphe représentatif de la carte et dans lequel chaque lien représente une portion inter-puce ou une portion intra-puce ;
- une détermination pour chaque puce, du temps de parcours de chaque portion de chemin traversant cette puce, chaque temps de parcours correspondant à la somme des temps de réalisation des opérations logiques appliquées au signal dans la puce ;
- une détermination du temps de parcours inter-puce pour chaque portion inter-puce représentée par un lien du graphe ;
- une détermination du temps de parcours de chaque chemin du système implémenté sur la carte, par cumul des temps de parcours intra-puce et des temps de parcours inter-puce associés à chaque lien du graphe.

2. Procédé selon la revendication 1, dans lequel la détermination des temps intra-puce et inter-puce sont basées :
- sur une valeur de retard type introduit par toute cellule logique du système pour les portions intra-puce ou une valeur provenant d'un outil d'analyse temporelle statique propre à la puce programmable pour les portions intra-puce ;
- sur les longueurs des pistes physiques ou une valeur provenant d'un outil d'analyse temporelle statique propre à la carte pour les portions inter-puce.

3. Procédé selon la revendication 1, dans lequel le temps de parcours d'une portion inter-puce est un retard introduit par une piste physique simple, ou un retard correspondant à l'ajout d'un sérialiseur et d'un désérialiseur intégrés aux puces situés respectivement en amont et en aval de cette piste dans le cas d'une piste multiplexée.

4. Procédé selon la revendication 3, dans lequel le temps de retard introduit par un sérialiseur et par un déserialiseur est chiffré en prenant en compte le rang de traitement du signal circulant dans le chemin relativement aux autres signaux.

5. Procédé selon la revendication 4, comportant la détermination pour chaque signal empruntant une portion multiplexée avant d'être délivré à une puce, de l'instant auquel ce signal est émis depuis la puce initiale et de l'instant auquel ce signal est délivré à la puce de destination.

6. Procédé selon la revendication 5, comportant, en cas de violation de synchronisation d'un signal multiplexé, la détermination d'un changement de l'ordre de traitement des signaux dans le sérialiseur et le désérialiseur assurant le multiplexage, pour supprimer la violation de synchronisation.

## Patentansprüche

1. Automatisiertes Verfahren zur Analyse eines integrierten Schaltkreises, der auf einer Leiterplatte implementiert ist, die mehrere programmierbare Chips vom Typ FPGA trägt, die gemäß einer vorgegebenen logischen Konzeption miteinander verbunden und programmiert sind, wobei diese Leiterplatte Inter-Chip-Verbindungen herstellt, die logische Bausteine verbinden, die zu verschiedenen Chips gehören, um Pfade zu bilden, die jeweils dazu bestimmt sind, von einem Signal durchlaufen zu werden, wobei jeder Pfad mindestens zwei Intra-Chip-Abschnitte sowie mindestens einen Inter-Chip-Abschnitt umfasst, wobei dieses Verfahren **gekennzeichnet ist durch**:
- das Erstellen eines Graphen, der repräsentativ für die Leiterplatte ist und in dem jede Verbindung einen Inter-Chip-Abschnitt oder einen Intra-Chip-Abschnitt darstellt;
- für jeden Chip eine Bestimmung der Durchlaufzeit für jeden diesen Chip durchsetzenden Pfadabschnitt, wobei jede Durchlaufzeit der Summe der Zeiten zum Durchführen der logischen Operationen entspricht, die auf das Signal in dem Chip angewandt werden;
- eine Bestimmung der Inter-Chip-Durchlaufzeit für jeden Inter-Chip-Abschnitt, der **durch** eine Verbindung des Graphen dargestellt ist;
- eine Bestimmung der Durchlaufzeit für jeden Pfad des Systems, das auf der Leiterplatte implementiert ist, **durch** Kumulieren der Intra-Chip-Durchlaufzeiten und der Inter-Chip-Durchlaufzeiten, die mit jeder Verbindung des Graphen verknüpft sind.

2. Verfahren nach Anspruch 1, bei dem die Bestimmung der Intra-Chip-Zeiten und der Inter-Chip-Zeiten basieren auf:
- einem Standard-Verzögerungswert, der durch jede logische Zelle des Systems für die Intra-Chip-Abschnitte eingebracht wird, oder einem Wert, der aus einem für den programmierbaren Chip spezifischen Werkzeug zur statischen Zeitanalyse für die Intra-Chip-Abschnitte stammt;
- den Längen der physikalischen Bahnen oder einem Wert, der aus einem für die Leiterplatte spezifischen Werkzeug zur statischen Zeitanalyse für die Inter-Chip-Abschnitte stammt.

3. Verfahren nach Anspruch 1, bei dem die Durchlaufzeit für einen Inter-Chip-Abschnitt eine Verzögerung ist, die von einer einfachen physikalischen Bahn eingebracht wird, oder eine Verzögerung, die dem Hinzufügen eines Serialisierers und eines Deserialisierers entspricht, die in die Chips integriert sind und sich stromaufwärts bzw. stromabwärts dieser Bahn im Falle einer Multiplex-Bahn befinden.

4. Verfahren nach Anspruch 3, bei dem die durch einen Serialisierer und durch einen Deserialisierer eingebrachte Verzögerungszeit beziffert wird, indem der Verarbeitungsrang des in dem Pfad fließenden Signals relativ zu den anderen Signalen berücksichtigt wird.

5. Verfahren nach Anspruch 4, umfassend für jedes Signal, das einen Multiplex-Abschnitt benutzt, ehe es einem Chip zugeführt wird, die Bestimmung des Zeitpunktes, zu dem dieses Signal aus dem Startchip gesendet wird, und des Zeitpunktes, zu dem dieses Signal dem Zielchip zugeführt wird.

6. Verfahren nach Anspruch 5, umfassend im Falle eines Synchronisierverstoßes eines multiplexten Signals die Bestimmung einer Änderung in der Verarbeitungsreihenfolge der Signale in dem Serialisierer und dem Deserialisierer, die das Multiplexen sicherstellen, um so den Synchronisierverstoß zu beseitigen.

## Claims

1. An automated method for analyzing a circuit embedded in an electronic board having a plurality of programmable FPGA chips that are interconnected and programmed, according to a predetermined logic design, with such board setting up inter-chip links connecting logic blocks belonging to different chips so as to form paths, each of which is intended to have a signal travel therethrough, with each path comprising at least two intra-chip portions and at least one inter-chip portion, with said method being **characterized by**:
- setting up a graph representing the board and wherein each link represents an inter-chip portion or an intra-chip portion;
- determining, for each chip, the time for travelling over each path portion that passes through said chip, with each travel time corresponding to the sum of the times for carrying out the logical operations applied to the signal in the chip;
- determining the inter-chip time for travelling over each inter-chip portion represented by a link in the graph,
- determining the time for travelling over each path of the system embedded in the board, by summing the intra-chip travel times, and the inter-chip travel times associated with each link of the graph.

2. A method according to claim 1, wherein the determination of intra-chip and inter-chip times is based:
- on a standard delay value introduced by any logic cell of the system for the intra-chip portions or a value from a static temporal analysis tool specific to the programmable chip for the intra-chip portions;
- on the lengths of the physical tracks or a value from a static temporal analysis tool specific to the map for the inter-chip portions.

3. A method according to claim 1, wherein the travel time of an inter-chip portion is a delay introduced by a simple physical track, or a delay corresponding to the addition of a serializer and a deserializer integrated in the chips and respectively located upstream and downstream of such track in the case of a multiplex track.

4. A method according to claim 3, wherein the delay time introduced by a serializer and a deserializer is encrypted while taking into account the processing rank of the signal circulating in the path relative to the other signals.

5. A method according to claim 4, comprising determining, for each signal travelling through a multiplex portion before being delivered to a chip, the time at which this signal is emitted from the original chip and the instant at which this signal is delivered to the destination chip.

6. A method according to claim 5, comprising, in case of a breach of synchronization of a multiplex signal, determining a change in the signal processing order in the serializer and deserializer ensuring the multiplexing, in order to cancel the breach of synchronization.
